# EUROPEAN PATENT APPLICATION

(11) **EP 2 730 876 A1**
(43) Date of publication of application: **14.05.2014**
(21) Application number: 12811516.9
(22) Date of filing: 08.07.2012
(51) Int. Cl.: F28D 19/04, F23L 15/02

(54) **ROTARY GAS-GAS HEATER WITH ISOLATING AIR CURTAIN STRUCTURE IN LEAKTIGHT SEALING SYSTEM**

(30) Priority: 09.07.2011 CN 201110191349
(71) Applicant: Cheng, Aiping, Beijing 100031 (CN)
(72) Inventor: Cheng, Aiping, Beijing 100031 (CN)
(74) Representative: Decamps, Alain René François
(86) International application number: PCT/CN2012/078326
(87) International publication number: WO 2013/007177

(57) **Abstract**

The present invention discloses a rotary gas-gas heat exchanger with an isolating air curtain structure of a leak-free sealing system. The rotary gas-gas heat exchanger comprises: a shell (2); a rotor (1), which is arranged in said shell (2) and is driven to rotate with respect to said shell (2); a sealing system, which is arranged between said shell (2) and a spindle of said rotor (1), and divides the space between said shell (2) and the spindle of said rotor (1) into an original flue gas circulation zone and a clean flue gas circulation zone. Said sealing system comprises two pairs of sealing plates (3) which are located at the upper and lower sides respectively and are opposite to each other. Said two sealing plates (3) are provided with at least one pair of holes which face with each other. Said at least one pair of holes communicate with a fan. In the heat exchanger of the present invention, the air leakage rate between the original flue gas circulation zone and the clean flue gas circulation zone is only 0.1-0.4%, which surpasses the leading level in the world.

## Description

### FIELD OF THE INVENTION

The present invention relates to a heat exchanger, and in particular to the improvement of a sealing device of a rotary gas-gas heat exchanger.

### BACKGROUND OF THE INVENTION

A rotary gas-gas heat exchanger (GGH) is among the most widely applied flue gas heat exchangers in a wet flue gas desulfurization (FGD) device. The operation principle lies in that the heat storing element in the rotor bay conveys heat from the raw high temperature flue gas to the clean cold flue gas, by means of smooth or corrugated metal foils on it surface or by means of other heat carriers. During operation, the raw high temperature flue gas passes a side of the rotor, while the clean cold flue gas passes the other side of the rotor. The rotor rotates slowly, so that the hot raw flue gas and the cold clean flue gas pass the plurality of heat conduction elements on the rotor in turn. When the raw high temperature flue gas passes the heat conduction elements, a portion of heat in the raw high temperature flue gas is transferred to the heat conduction elements. When the heat conduction elements rotate to the clean cold flue gas side, the heat carried by them is transferred to the clean cold flue gas. Thus, the temperature of the clean cold flue gas is increased, while the heat conduction elements themselves are cooled. These two flue gases flow through two portions of the rotor which are separated along the diameter, and these two portions are separated by a sealing plate. The flow directions of the original flue gas and the clean flue gas are opposite to each other.

GGH is composed of a cylindrical rotor, a cylindrical shell, a transmission device, a sealing device, and a soot blowing system. The rotor is divided into several fan-shaped bays. Each fan-shaped bay is filled with heat conduction elements formed by corrugated plates. The rotor is divided into an original flue gas circulation zone and a clean flue gas circulation zone along the diameter in its cross section. The two circulation zones are separated by a transition region (which is equipped with a sealing system). The original flue gas circulation zone and the clean flue gas circulation zone communicate with an inlet flue and an outlet flue respectively. A motor drives the rotor through a transmission device. The heat storing elements of the rotor pass the original flue gas circulation zone and the clean flue gas circulation zone in turns, the high temperature original flue gas transfers heat to the heat conduction elements from down to up, and the heated surfaces of these heat conduction elements turn to the clean flue gas circulation zone to transfer the stored heat to the cold clean flue gas which circulates from up to down. Each turn of the rotor indicates a heat transfer process. The transition region is a sealed region which separates the original flue gas circulation zone from the clean flue gas circulation zone. The original flue gas circulation zone is namely the raw original flue gas zone, while the cold flue gas circulation zone is namely the clean flue gas zone. Since the pressure of the original flue gas is larger than that of the clean flue gas, for the purpose of preventing the original flue gas from leaking into the clean flue gas zone through the gap between the rotor and the shell, the GGH is provided with a radial and axial sealing, which is arranged at the sealed region, and a annular sealing which is arranged between the shell and the periphery of the upper and lower revolution surfaces of the rotor.

Currently, the rotary GGHs in the domestic desulfurization systems mostly adopt technologies which are imported from foreign countries like USA, Germany, France and Britain. All of the imported rotary GGHs suffer from the defects like insufficient sealing effect and a relatively high air leakage rate. For these imported rotary GGH devices, the air leakage rate is guaranteed to a value of 0.5-1%, while such a guaranteed value generally can not be reach during practical applications. According to the statistical results, the air leakage rate for a superior GGH may reach 0.8% in a short period of time after the first installation, and has an average of 1.5%. The lowest air leakage rate may reach 0.6%, and is larger than 10% in the worst case (e.g., the rotary GGH device in Huadian Laiwu power plant), which seriously affect the total efficiency of the desulfurization system.

### SUMMARY OF THE INVENTION

It is an object of the present invention to overcome defects in the prior art.

It is another obj ect of the present invention to provide a rotary gas-gas heat exchanger which has an improved sealing performance.

It is another obj ect of the present invention to provide a sealing structure in the heat exchanger which is simple in structure, low in cost, and excellent in performance.

The technical solution of the present invention lies in a rotary gas-gas heat exchanger with an isolating air curtain structure of a leak-free sealing system, comprising: a shell; a rotor, which is arranged in said shell and is driven to rotate with respect to said shell; a sealing system, which is arranged between said shell and a spindle of said rotor, and divides the space between said shell and the spindle of said rotor into an original flue gas circulation zone and a clean flue gas circulation zone; wherein said sealing system comprises two pairs of sealing plates which are located at the upper and lower sides respectively and are opposite to each other, said two sealing plates are provided with at least one pair of holes which face with each other, and said at least one pair of holes communicate with a fan.

Preferably, in said rotary gas-gas heat exchanger with an isolating air curtain structure of a leak-free sealing system, a ring-shaped rack is arranged at the periphery of said rotor, a driving mechanism drives said rotor through a transmission mechanism, and the transmission mechanism is provided with a gear member which engages with the ring-shaped rack.

Preferably, in said rotary gas-gas heat exchanger with an isolating air curtain structure of a leak-free sealing system, said rotor comprises a spindle and a plurality of radial sealing sheets which extend outward from the spindle, and each sealing plate comprises two upper and lower fan-shaped sealing plates which extend from an edge of the shell and collect at the spindle of the rotor and which face radial sealing sheets of the rotor.

Preferably, in said rotary gas-gas heat exchanger with an isolating air curtain structure of a leak-free sealing system, an arc length of the outer edge of each fan-shaped sealing plate is 1/10-1/15 of the arc length of the edge of the shell.

Preferably, at least one pair of long holes or holes with other shapes in the opposite fan-shaped sealing plates have a width which increases gradually from the center to periphery of the rotor.

Preferably, in said rotary gas-gas heat exchanger with an isolating air curtain structure of a leak-free sealing system, said fan is a low-leakage fan, which communicates with all holes in said at least one pair of holes via low-leakage air pipelines.

Preferably, in said rotary gas-gas heat exchanger with an isolating air curtain structure of a leak-free sealing system, said original flue gas circulation zone communicates with said pipeline for the original flue gas, while said cold clean flue gas circulation zone communicates with the clean flue gas pipelines, and the flow direction of the original flue gas is opposite to the transfer direction of the clean flue gas.

Preferably, in said rotary gas-gas heat exchanger with an isolating air curtain structure of a leak-free sealing system, two pressure sensors are arranged at an output end of said fan and a pipeline for the original flue gas respectively, both pressure sensors are in communication with a controller, and said controller controls the opening degree of an outlet valve of the fan or the power of the fan according to values of said two pressure sensors.

Preferably, in said rotary gas-gas heat exchanger with an isolating air curtain structure of a leak-free sealing system, two pressure sensors are arranged at an output end of said fan and a pipeline for the original flue gas respectively, a differential pressure transducer is connected between said two pressure sensors, said differential pressure transducer transfers in real time a differential pressure between said two pressure sensors to a controller, and said controller controls the opening degree of an outlet valve of the fan or the power of the fan according to said differential pressure.

Preferably, in said rotary gas-gas heat exchanger with an isolating air curtain structure of a leak-free sealing system, said differential pressure is set so that the pressure at the output end of the said fan is larger than the pressure at said pipeline for the original flue gas by 300∼500 Pa.

The technical effects of the present invention lie in that such a heat exchanger has an excellent sealing effect and a low air leakage rate. In particular, the present invention may further comprise two pairs of fan-shaped sealing plates, and pairs of holes are arranged in the two pairs of fan-shaped sealing plates which correspond to each other in positions. In this manner, when the low-leakage fan is started, the pairs of holes which correspond to each other in positions form an air curtain from the upper and lower parts to the middle part. The air curtain blocks leakage between the original flue gas and the clean flue gas, and only allows the heat of the high temperature flue gas to be transferred to the cold flue gas through the heat conduction element in the rotor. In the present invention, a ring-shaped rack is arranged at the periphery of said rotor, which facilitates driving the motor more smoothly and reducing noise. In the present invention, the spindle of rotor can comprise a central supporting shaft, a bearing sleeve surrounding the periphery of the central supporting shaft, and a plurality of radial sealing sheets which extend outward from the bearing sleeve. These axial sealing plates extend all the way to a position close to the inner wall of the shell. Generally, the gap between the rotor and the shell does not exceed 1/5 of the inner radius of the shell. Thus, these axial sealing plates not only perform axial sealing, but also act as a portion of the flue for guiding the follow of flue gas. In the present invention, the arc length of the outer edge of each fan-shaped sealing plate is 1/10-1/15 of the arc length of the edge of the shell, so that the sealing system occupies a very small space in the shell. In this way, more space is set apart for the heat exchange, thus increasing the heat exchanging efficiency. In the present invention, at least one pair of long holes or holes with other shapes in the opposite fan-shaped sealing plates have a width which increases gradually from the center to periphery of the rotor. Since the leakage condition near the center of the rotor is better than that near the periphery (the leakage condition is relatively serious at positions near the periphery, because there is a gap between the rotor and the shell at positions near the periphery), the holes near the center has a relatively small width and needs less air flux, while the holes near the periphery has a relatively large width and needs more air flux. The width of holes increases gradually from the center to periphery of the rotor. With such a design, the blowing resources of the fan can be reasonably allocated. In the present invention, the flow direction of the original flue gas is opposite to the transfer direction of the clean flue gas. For example, the original flue gas is transferred from down to up, while the clean flue gas is transferred from up to down. This helps to transfer heat efficiently, since a temperature difference is facilitated in this manner.

In the present invention, two pressure measurement points of differential pressure transducers are arranged at an outlet of said low-leakage fan and an inlet flue of the original flue gas respectively. The differential pressure transducers are in communication with a controller. Said controller controls the opening degree of an outlet valve of the fan or the power of the fan according to values of said differential pressure transducers. According to detection results of the differential pressure transducers, the controller can adjust the rate of air output from the fan at any time. It is generally a choice based on experience to set the outlet of the low-leakage fan at a pressure lower than the pipeline of the original flue gas by 300-500 Pa, so as to realize the aims that the energy is not waste and an excellent sealing effect is provided. If the pressure difference is larger than 500 Pa, the opening degree of an outlet valve of the fan or the power of the fan is decreased. Otherwise, if the pressure difference is smaller than 300 Pa, the opening degree of the outlet valve of the fan or the power of the fan is increased.

### BRIEF DESCRIPTION OF THE DRAWINGS

Fig. 1 is a structural diagram showing a gas-gas heat exchanger which has been equipped with a leak-free sealing system of the present invention;
Fig. 2 is a cross-sectional view showing the gas-gas heat exchanger which has bee equipped with the leak-free sealing system along line A-A in Fig. 1;
Fig. 3 is a cross-sectional view showing the gas-gas heat exchanger which has bee equipped with the leak-free sealing system along line B-B in Fig. 1, in which only a shell, a rotor and some sealing components are shown;
Fig. 4 is a cross-sectional view showing the gas-gas heat exchanger which has bee equipped with the leak-free sealing system along line C-C in Fig. 1, in which a shell, a spindle, a fan-shaped sealing plate and holes thereon are shown, and the external contour of the rotor is now shown;
Fig. 5 is a structural diagram showing sealed sections which a sealing system adopts in a gap between the rotor and the shell; and
Fig. 6 is a structural diagram showing sealed sections of another type which a sealing system adopts in a gap between the rotor and the shell.

### DETAILED DESCRIPTION OF THE EMBODIMENTS

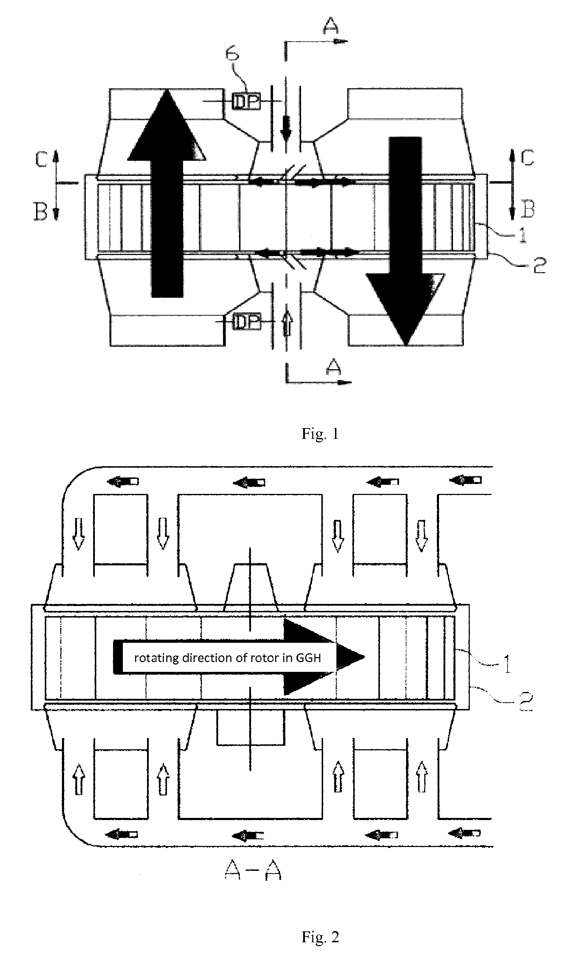

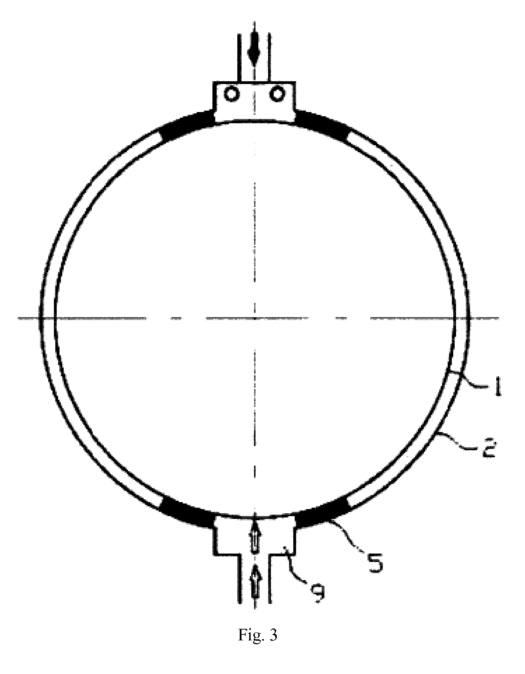

As shown in Figs. 1-4, the heat exchanger of the present invention comprises a rotor 1, a shell 2, a sealing system, and a transmission device. The shell 2 is provided with two pairs of fan-shaped sealing plates 3 at both ends of the rotor 1 respectively. Said fan-shaped sealing plates 3 are provided with long holes 4, and are further provided with an isolating air pipeline which communicates with a low-leakage fan.

Labyrinth isolating sealed sections 5 are arranged at positions of an annular chamber enclosed by said shell 2 and rotor 1 which are close to both sides of the fan-shaped sealing plates 3. The shell 2 is provided with an isolating air pipeline at the portion between two neighboring isolating sealed sections 5 which communicates with the low-leakage fan.

Two pressure sensors are arranged at said pipeline which communicates with the output end of the low-leakage fan and the pipeline at the original flue gas side. A differential pressure transducer 6 is connected between said two pressure sensors. The differential pressure transducer 6 is connected with a controller, which can control the opening degree of the valve at the outlet pipeline of the low-leakage fan or the frequency of the low-leakage motor.

A pressure measurement point is mounted at a blast box (or pipeline) for the isolating low-leakage air, and a pressure measurement point is mounted at a pipeline at the corresponding original flue gas side. The differential pressure transducer 6 is mounted between these two pressure measurement points. The differential pressure signal is transferred to a dedicated programmable logic controller PLC or a distributed control system DCS in a central control room. The opening degree of the pipeline valve at the outlet of the low-leakage fan or the frequency of the low-leakage motor can be controlled accurately according to variations of the differential pressure signal, so as to adjust the sealing accurately and operate in an energy-saving manner.

The flux of a purge air is reasonably adjusted, so as to reach an amount of revolving and carrying leakage of 1.5-2 times.

According to the present invention, the air leakage rate in the rotary GGH can be reduced to 0.1-0.4%, which surpasses the leading level in the world. As a result, hundreds of thousands CNY can be save each month for a 600MW unit.

### The first embodiment

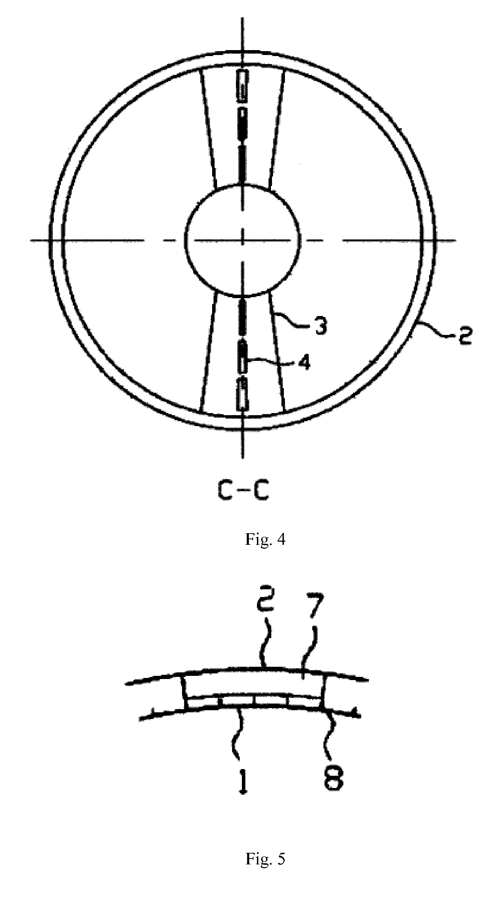

As shown in Fig. 4, at the driving end and non-driving end of the rotor 1 along a symmetry axis of the upper and lower fan-shaped sealing plates 3, long holes 4 are arranged and sealing air pipelines are mounted for injecting isolating low-leakage air. By injecting low-leakage air, an efficient isolating air curtain is formed between the upper and lower two pairs of fan-shaped sealing plates 3 and the rotor 1. A pressure measurement point is mounted at a blast box or pipeline for purging air, and a pressure measurement point is mounted at a pipeline for the corresponding original flue gas side. The differential pressure transducer 6 is mounted between the pressure measurement points. The differential pressure transducer 6 transfers the differential pressure signal to a dedicated PLC or a DCS (i.e., the controller) in a central control room. The opening degree of the pipeline valve at the outlet of the low-leakage fan or the frequency of the low-leakage motor can be controlled accurately according to variations of the differential pressure signal, so as to adjust the sealing accurately and operate in an energy-saving manner.

The rounded body at the exact center of Fig. 4 is a spindle, and two pairs of fan-shaped sealing plates 3 extend outward from the spindle. The circle adjacent to the inside of the shell 2 does not indicate the rotor 1, but the edge of the annular sealing component outside the outer periphery of the rotor. In other words, the fan-shaped sealing plates 3 extends all the way from the spindle to the annular sealing component, and only a slight gap remains between the fan-shaped sealing plate and the shell 2.

### The second embodiment

As shown in Fig. 5, said labyrinth isolating sealed section is composed of the sealing plate 7 and the periphery of rotor 1. The sealing plate 7 has an inner wall in a curved shape that is adapted to the periphery of rotor 1, and the sealing plate 7 is fastened to an inner wall of the shell 2. Such a structure is suitable for the case in which axial sealing sheets 8 are fixed to the periphery of rotor 1. Two curved sealing plates 7 are mounted at positions of an annular chamber enclosed by the rotor 1 and shell 2 which are close to the fan-shaped sealing plates 3, so that there are four sealing plates 7 in total. An axial isolating sealed cabin 9 is formed at the driving end and non-driving end respectively. At the sealed sections at both sides of each axial isolating sealed cabin 9, multistage small sealing space is formed by the axial sealing sheets 8 of the GGH rotor 1 and the curved sealing plates 7. In this way, a labyrinth sealing structure is formed to enhance the sealing effect. Isolating low-leakage air is injected from the axial isolating sealed cabin 9 at the driving and non-driving ends, so as to isolate the original flue gas and the clean flue gas, thus forming an isolating sealing in the driving ring chamber and blocking leakage.

### The third embodiment

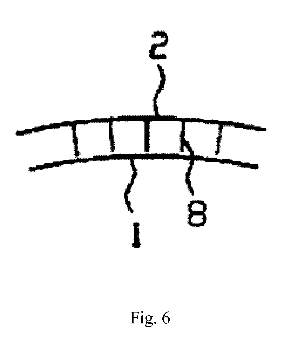

As shown in Fig. 6, said labyrinth isolating sealed sections are composed by several axial sealing sheets which are fixed to the inner wall of the shell 2 and the periphery of rotor 1. Such a structure is suitable for the case in which the periphery of rotor 1 has a smooth circumferential surface.

While the present invention has been described in connection with preferred embodiments, it will be understood that modifications and equivalents thereof within the principles outlined above will be evident to those skilled in the art, and thus the invention is not limited to the preferred embodiments but is intended to encompass such modifications and equivalents.

## Claims

1. A rotary gas-gas heat exchanger with an isolating air curtain structure of a leak-free sealing system, comprising:
a shell (2);
a rotor (1), which is arranged in said shell (2) and is driven to rotate with respect to said shell (2);
a sealing system, which is arranged between said shell (2) and a spindle of said rotor (1), and divides the space between said shell and the spindle of said rotor (1) into an original flue gas circulation zone and a clean flue gas circulation zone;
wherein said sealing system comprises two pairs of sealing plates which are located at the upper and lower sides respectively and are opposite to each other, said two sealing plates are provided with at least one pair of holes which face with each other, and said at least one pair of holes communicate with a fan.

2. The rotary gas-gas heat exchanger with an isolating air curtain structure of a leak-free sealing system according to claim 1, **characterized in that** a ring-shaped rack is arranged at the periphery of said rotor (1), a driving mechanism drives said rotor (1) through a transmission mechanism, and the transmission mechanism is provided with a gear member which engages with the ring-shaped rack.

3. The rotary gas-gas heat exchanger with an isolating air curtain structure of a leak-free sealing system according to claim 1, **characterized in that** said rotor (1) comprises a spindle and a plurality of radial sealing sheets which extend outward from the spindle, and each sealing plate comprises two upper and lower fan-shaped sealing plates (3) which extend from an edge of the shell (2) and collect at the spindle of the rotor (1) and which face radial sealing sheets of the rotor (1).

4. The rotary gas-gas heat exchanger with an isolating air curtain structure of a leak-free sealing system according to claim 1, **characterized in that** an arc length of the outer edge of each fan-shaped sealing plate (3) is 1/10-1/15 of the arc length of the edge of the shell (2).

5. The rotary gas-gas heat exchanger with an isolating air curtain structure of a leak-free sealing system according to claim 1, **characterized in that** said at least one pair of holes are three pairs of square holes, and said three pairs of square holes have a width which increases gradually from the center to periphery of the rotor (1).

6. The rotary gas-gas heat exchanger with an isolating air curtain structure of a leak-free sealing system according to claim 1, **characterized in that** said fan is a low-leakage fan, which communicates with all holes in said at least one pair of holes via low-leakage air pipelines.

7. The rotary gas-gas heat exchanger with an isolating air curtain structure of a leak-free sealing system according to claim 1, **characterized in that** said original flue gas circulation zone communicates with said pipeline for the original flue gas, while said cold clean flue gas circulation zone communicates with the clean flue gas pipelines, and the flow direction of the original flue gas is opposite to the transfer direction of the clean flue gas.

8. The rotary gas-gas heat exchanger with an isolating air curtain structure of a leak-free sealing system according to claim 1, **characterized in that** two pressure sensors are arranged at an output end of said fan and a pipeline for the original flue gas respectively, both pressure sensors are in communication with a controller, and said controller controls the opening degree of an outlet valve of the fan or the power of the fan according to values of said two pressure sensors.

9. The rotary gas-gas heat exchanger with an isolating air curtain structure of a leak-free sealing system according to claim 1, **characterized in that** two pressure sensors are arranged at an output end of said fan and a pipeline for the original flue gas respectively, a differential pressure transducer (6) is connected between said two pressure sensors, said differential pressure transducer (6) transfers in real time a differential pressure between said two pressure sensors to a controller, and said controller controls the opening degree of an outlet valve of the fan or the power of the fan according to said differential pressure.

10. The rotary gas-gas heat exchanger with an isolating air curtain structure of a leak-free sealing system according to claim 9, **characterized in that** said differential pressure is set so that the pressure at the output end of the said fan is larger than the pressure at said pipeline for the original flue gas by 300∼500 Pa.
